# EUROPEAN PATENT APPLICATION

(11) **EP 4 819 285 A1**
(43) Date of publication of application: **07.10.2026**
(21) Application number: 25755255.4
(22) Date of filing: 13.02.2025
(51) Int. Cl.: H01M 10/0569, H01M 10/0567, H01M 10/052, H01M 4/58, H01M 4/38, H01M 4/40

(54) **ELECTROLYTE FOR LITHIUM-SULFUR BATTERY AND LITHIUM-SULFUR BATTERY COMPRISING SAME**

(30) Priority: 15.02.2024 KR 20240021862
(71) Applicant: LG Energy Solution, Ltd., Seoul 07335 (KR)
(72) Inventor: JUNG, Jin-Kwan, Daejeon 34122 (KR); PARK, Seong-Hyo, Daejeon 34122 (KR); LEE, Chang-Hoon, Daejeon 34122 (KR)
(74) Representative: Goddar, Heinz J.
(86) International application number: PCT/KR2025/002176
(87) International publication number: WO 2025/174108

(57) **Abstract**

The present disclosure provides an electrolyte for a lithium-sulfur battery including a predetermined non-aqueous solvent to achieve high capacity retention and improved life characteristics and a lithium-sulfur battery including the same.

The electrolyte for the lithium-sulfur battery according to an embodiment of the present disclosure includes a lithium salt and a non-aqueous solvent, wherein the non-aqueous solvent includes a linear ether-based solvent, but does not include a cyclic ether-based solvent, wherein the linear ether-based solvent includes a compound having a structure of the following Chemical Formula 1, and wherein the compound having the structure of the following Chemical Formula 1 is included in an amount of from 35 vol% to 70 vol% based on a total 100 vol% of the non-aqueous solvent: 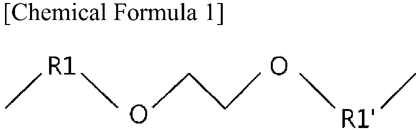 wherein R1 and R1' are each independently a straight-chain or branched alkylene group with 1 to 10 carbon atoms, a straight-chain or branched alkenylene group with 1 to 10 carbon atoms, a cycloalkylene group with 3 to 10 carbon atoms, or an arylene group with 6 to 10 carbon atoms.

## Description

### TECHNICAL FIELD

The present disclosure relates to an electrolyte for a lithium-sulfur battery and a lithium-sulfur battery including the same.

This application is based on and claims priority from Korean Patent Application No. 10-2024-0021862, filed on February 15, 2024, with the Korean Intellectual Property Office, the disclosure of which is incorporated herein in its entirety by reference.

### BACKGROUND

A lithium-sulfur battery is a battery system using a sulfur-based material containing a sulfur-sulfur bond as a positive electrode active material, and a lithium metal, a carbon-based material in which intercalation/deintercalation of lithium ions takes place, or silicon or tin that forms an alloy with lithium as a negative electrode active material.

In the lithium-sulfur battery, sulfur, the main component of the positive electrode active material has advantages of a material with low atomic weight, being abundant and readily available, low cost, low toxicity and eco-friendliness.

In addition, in the lithium-sulfur battery, the theoretical specific capacity based on conversion reaction (S₈ +16Li⁺ +16e⁻ → 8Li₂S) between lithium ions and sulfur in the positive electrode amounts to 1,675 mAh/g, and when lithium metal is used as the negative electrode, the theoretical energy density is 2,600 Wh/kg. Because this value is higher than the theoretical energy density of other battery systems currently being studied (Ni-MH battery: 450 Wh/kg, Li-FeS battery: 480 Wh/kg, Li-MnO₂ battery: 1,000 Wh/kg, Na-S battery: 800 Wh/kg) and lithium ion batteries (250 Wh/kg), lithium-sulfur batteries are gaining attention as a high-capacity, eco-friendly and low-cost lithium secondary battery among secondary batteries developed so far.

Inside the lithium-sulfur battery, during discharging, as sulfur gains electrons, a reduction reaction occurs at the positive electrode, and as lithium is ionized, an oxidation reaction occurs at the negative electrode. Specifically, during discharging, oxidation occurs in which lithium (which is the negative electrode active material) releases electrons into lithium cation, and reduction occurs in which the sulfur-based material (which is the positive electrode active material) gains electrons. Here, through the reduction reaction of the sulfur-based material, the S-S bond gains two electrons and is converted to sulfur anion. The lithium cation produced by the oxidation reaction of lithium migrates to the positive electrode through the electrolyte, and bonds with the sulfur anion produced by the reduction reaction of the sulfur-based compound to form a salt. Specifically, sulfur before the discharge has a cyclic S₈ structure, and it is converted to lithium polysulfide (Li₂Sx) by the reduction reaction and is completely reduced to lithium sulfide (Li₂S).

In this instance, generally, the dissolution of the active material from the positive electrode and the formation of polysulfide occur during the first discharge of the lithium-sulfur battery, and the deposition of the eluted polysulfide in solid state on the positive electrode occurs during the second discharge.

However, during discharging, the polysulfide easily elutes into the electrolyte, causing side reaction in the battery, which degrades the battery fast and reduces the lifespan, and accelerates lithium loss, thereby failing to achieve long-term operation.

### DISCLOSURE

### Technical Problem

As a result of inventors' extensive research to solve the above-described problems, the present disclosure is directed to providing an electrolyte for a lithium-sulfur battery including a predetermined solvent to prevent lithium polysulfide-induced degradation of a negative electrode.

The present disclosure is further directed to providing a lithium-sulfur battery with higher capacity retention and improved life characteristics.

### Technical Solution

To achieve the above-described objective, the present disclosure provides an electrolyte for a lithium-sulfur battery and a lithium-sulfur battery of the following embodiments.

According to a first embodiment,
the electrolyte for the lithium-sulfur battery includes a lithium salt and a non-aqueous solvent,
wherein the non-aqueous solvent includes a linear ether-based solvent, but does not include a cyclic ether-based solvent,
wherein the linear ether-based solvent includes a compound having a structure of the following Chemical Formula 1, and
wherein the compound having the structure of the following Chemical Formula 1 is included in an amount of from 35 vol% to 70 vol% based on a total 100 vol% of the non-aqueous solvent: 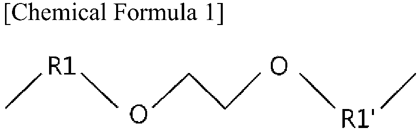
wherein R1 and R1' are each independently a straight-chain or branched alkylene group with 1 to 10 carbon atoms, a straight-chain or branched alkenylene group with 1 to 10 carbon atoms, a cycloalkylene group with 3 to 10 carbon atoms, or an arylene group with 6 to 10 carbon atoms.

According to a second embodiment, in the first embodiment,
the electrolyte for the lithium-sulfur battery is characterized in that R1 and R1' in the compound having the structure of the Chemical Formula 1 are each independently a straight-chain alkylene group with 1 to 10 carbon atoms.

According to a third embodiment, in the first or second embodiment,
the electrolyte for the lithium-sulfur battery is characterized in that the compound having the structure of the Chemical Formula 1 is included in an amount of from 40 vol% to 60 vol% based on the total 100 vol% of the non-aqueous solvent.

According to a fourth embodiment, in any one of the first to third embodiments,
the electrolyte for the lithium-sulfur battery is characterized in that the non-aqueous solvent further includes dimethoxymethane, dimethoxyethane(DME), dimethoxypropane, ethylene glycol ethylmethylether, or a mixture thereof as the linear ether-based solvent.

According to a fifth embodiment, in any one of the first to fourth embodiments,
the electrolyte for the lithium-sulfur battery is characterized in that the non-aqueous solvent further includes dimethoxy ethane (DME) as the linear ether-based solvent.

According to a sixth embodiment, in any one of the first to fifth embodiments,
the electrolyte for the lithium-sulfur battery is characterized in that the non-aqueous solvent is composed of the linear ether-based solvent.

According to a seventh embodiment, in any one of the first to sixth embodiments,
the electrolyte for the lithium-sulfur battery is characterized by further including an additive.

According to an eighth embodiment, in the seventh embodiment,
the electrolyte for the lithium-sulfur battery is characterized in that the additive includes a nitric acid-based compound.

According to a ninth embodiment, in the eighth embodiment,
the electrolyte for the lithium-sulfur battery is characterized in that the nitric acid-based compound includes lithium nitrate (LiNO₃)_{.}

According to a tenth embodiment,
there is provided a lithium-sulfur battery including a positive electrode; a negative electrode; a separator between the positive electrode and the negative electrode; and an electrolyte,
wherein the electrolyte is defined in any one of the first to ninth embodiments.

According to an eleventh embodiment, in the tenth embodiment,
the lithium-sulfur battery is characterized in that the positive electrode includes a sulfur-containing compound as a positive electrode active material.

According to a twelfth embodiment, in the tenth or eleventh embodiment,
the lithium-sulfur battery is characterized in that the negative electrode includes a lithium metal, a lithium alloy or a mixture thereof as a negative electrode active material.

### Advantageous Effects

The present disclosure may prevent polysulfide-induced degradation of the negative electrode by using the predetermined non-aqueous solvent having different solubility for polysulfide. Specifically, the present disclosure may prevent degradation of the negative electrode by including the compound having the specific structural formula with relatively low solubility for polysulfide.

Accordingly, the electrolyte for the lithium-sulfur battery of the present disclosure and the lithium-sulfur battery including the same may have higher capacity retention and improved life characteristics.

### BRIEF DESCRIPTION OF THE DRAWINGS

The accompanying drawings illustrate exemplary embodiments of the present disclosure and together with the foregoing disclosure, serve to provide a better understanding of the technical aspects of the present disclosure, and thus, the present disclosure is not construed as being limited to the drawings.
FIG. 1 is a graph showing the measured energy density vs cycle number in lithium-sulfur batteries of Example 1, Comparative Example 1, Comparative Example 2 and Comparative Example 3.
FIG. 2 is a graph showing the measured Coulombic efficiency vs cycle number in lithium-sulfur batteries of Example 2 and Comparative Example 4.
FIG. 3 is a graph showing the measured energy density vs cycle number in lithium-sulfur batteries of Example 1, Example 3, Comparative Example 5 and Comparative Example 6.
FIG. 4 is a graph showing the measured energy density vs cycle number in lithium-sulfur batteries of Example 3, Comparative Example 7 and Comparative Example 8.
FIG. 5 is a graph showing the measured energy density vs cycle number in lithium-sulfur batteries of Example 4, Comparative Example 9 and Comparative Example 10.

### BEST MODE

Hereinafter, the present disclosure will be described in more detail.

The terms or words used in the specification and the appended claims should not be construed as limited to general and dictionary meanings, and rather, should be interpreted based on the meanings and concepts corresponding to the technical aspect of the present disclosure on the basis of the principle that the inventor is allowed to define the terms appropriately for the best explanation.

The terms as used herein are used to describe exemplary embodiments and are not intended to be limiting of the present disclosure. The singular forms include the plural forms unless the context clearly indicates otherwise.

It should be understood that "comprising", "including" or "having" when used in this specification, specifies the presence of the stated elements, but does not preclude the presence or addition of one or more other elements unless expressly stated otherwise.

The terms "about" and "substantially" are used herein in the sense of at, or nearly at, when given the manufacturing and material tolerances inherent in the stated circumstances and are used to prevent the unscrupulous infringer from unfairly taking advantage of the present disclosure where exact or absolute figures are stated as an aid to understanding the present disclosure.

In this specification, A and/or B as used herein refers to either A or B or both.

The term "composite" as used herein refers to a material in which two or more materials are combined to form physically or chemically different phases and which exhibits more effective functions.

The term "polysulfide" as used herein is the concept that covers "polysulfide ion (Sₓ²⁻, x = 8, 6, 4, 2)" and "lithium polysulfide (Li₂Sₓ or Li₂Sₓ⁻ , x= 8, 6, 4, 2)".

Lithium secondary batteries, especially lithium-sulfur batteries suffer from degradation of the negative electrode due to lithium sulfide and/or polysulfide by continuous reaction between the lithium negative electrode and the electrolyte during charging/discharging, and accumulation of lithium sulfide on the negative electrode surface, resulting in shorter life. In addition, the continuous reaction between the negative electrode and the electrolyte accelerates the decomposition of the lithium salt, resulting in low stability. Accordingly, an aspect of the present disclosure is aimed at solving the above-described problems.

An electrolyte for a lithium-sulfur battery of the present disclosure includes:
a lithium salt and a non-aqueous solvent,
wherein the non-aqueous solvent includes a linear ether-based solvent, but does not include a cyclic ether-based solvent,
wherein the linear ether-based solvent includes a compound having a structure of the following Chemical Formula 1, and
wherein the compound having the structure of the following Chemical Formula 1 is included in an amount of from 35 vol% to 70 vol% based on the total 100 vol% of the non-aqueous solvent: 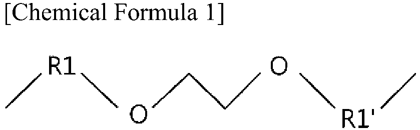
where R1 and R1' are each independently a straight-chain or branched alkylene group with 1 to 10 carbon atoms, a straight-chain or branched alkenylene group with 1 to 10 carbon atoms, a cycloalkylene group with 3 to 10 carbon atoms, or an arylene group with 6 to 10 carbon atoms.

The above Chemical Formula may be represented by CH₃-(R1)-O-CH₂CH₂-O-(R1')-CH₃.

The electrolyte for the lithium-sulfur battery may include a solid electrolyte, a polymer electrolyte, a gel electrolyte or a liquid electrolyte, and preferably, a liquid electrolyte.

### Lithium salt

In the present disclosure, the lithium salt is a compound that provides lithium ions, and may include any lithium salt used in the electrolyte of the lithium-sulfur battery without limitation.

The lithium salt may include LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlO₄, LiAlCl₄, LiCH₃SO₃, LiCF₃SO₃, LiN(CF₃SO₂)₂, LiN(C₂F₅SO₂)₂, LiN(SO₂F)₂, (CF₃SO₂)₃CLi, LiB(C₂O₄)₂ or LiC₄F₉SO₃.

In the present disclosure, to increase the usability of sulfur and achieve high capacity and high voltage in the battery, the lithium salt may include Li-FSI and/or Li-BETI. The lithium salt may include Li-FSI (LiN(SO₂F)₂) and/or Li-BETI (LiN(C₂F₅SO₂)₂) in an amount of 80 wt% or more, or 90 wt% or more, or 100% based on the total 100 wt% of the lithium salt.

The concentration of the lithium salt ranges from 0.1 M to 2.0 M, preferably from 0.5 M to 1 M, and more preferably from 0.5 M to 0.75 M. When the concentration of the lithium salt falls within the aforementioned range, the electrolyte has the optimal conductivity and viscosity, leading to good electrolyte performance and effective migration of lithium ions. When the concentration of the lithium salt is below the aforementioned range, it may be difficult to ensure ionic conductivity suitable for the operation of the battery, and when the concentration of the lithium salt is above the aforementioned range, the viscosity of the electrolyte increases, resulting in low mobility of lithium ions, or decomposition reaction of the lithium salt increases, resulting in performance degradation of the battery.

### Non-aqueous solvent

The non-aqueous solvent may be used to dissolve the components included in the electrolyte, such as the lithium salt, and/or an additive as described below.

The non-aqueous solvent includes the linear ether-based solvent, but does not include the cyclic ether-based solvent. Because the cyclic ether-based solvent has lower boiling point, while the linear ether-based solvent has higher boiling point, when the non-aqueous solvent includes the linear ether-based solvent, the boiling point of the electrolyte may be increased, thereby achieving stable operation at high temperature, so there is a thermal stability advantage.

The linear ether-based solvent includes the compound having the structure of the following Chemical Formula 1:

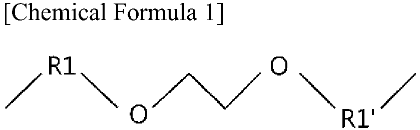

R1 and R1' are each independently a straight-chained or branched alkylene group with 1 to 10 carbon atoms, a straight-chained or branched alkenylene group with 1 to 10 carbon atoms, a cycloalkylene group with 3 to 10 carbon atoms, or an arylene group with 6 to 10 carbon atoms.

Specifically, R1 and R1' may be each independently a straight-chain alkylene group with 1 to 10 carbon atoms, 1 to 3 carbon atoms or 1 carbon atom. For example, the compound having the structure of the above Chemical Formula 1 may be ethylene glycol diethyl ether (EGDEE).

In particular, the compound having the structure of Chemical Formula 1 may not relatively participate in coordination due to alkyl groups, which exhibit electron withdrawing and steric hindrance effects, around the oxygen (O) atom that coordinates with lithium ions, whereby the solubility for polysulfides is lowered, and the compound may exhibit characteristics of a non-solvent.

The compound having the structure of the above Chemical Formula 1 may be included in an amount of from 35 vol% to 70 vol%, or from 40 vol% to 60 vol% based on the total 100 vol% of the non-aqueous solvent.

When the compound having the structure of the above Chemical Formula 1 is included in the aforementioned amount, this may have a beneficial effect on increasing the boiling point of the electrolyte and decreasing the property of dissolving sulfur.

According to an embodiment of the present disclosure, the non-aqueous solvent may be composed of the linear ether-based solvent. That is, the non-aqueous solvent may include the compound having the structure of Chemical Formula 1 and further include the linear ether-based solvent other than the compound having the structure of Chemical Formula 1.

Specifically, the linear ether-based solvent other than the compound having the structure of Chemical Formula 1 include, for example, dimethoxymethane, dimethoxyethane(DME), dimethoxypropane, ethylene glycol ethyl methyl ether, diethylene glycol dimethyl ether (DGDME) or a mixture of two or more of them.

According to an embodiment of the present disclosure, the non-aqueous solvent may further include dimethoxyethane (DME) or diethylene glycol dimethyl ether (DGDME) as the linear ether-based solvent.

According to an embodiment of the present disclosure, the non-aqueous solvent may include a combination of ethylene glycol diethyl ether (EDGEE) and dimethoxyethane (DME). According to this combination, dimethoxyethane (DME) having higher solubility for polysulfide combined with ethylene glycol diethyl ether (EDGEE) having the structure of Chemical Formula 1 having lower solubility for polysulfide may prevent degradation of the negative electrode.

When only the solvent having low solubility for polysulfide is used, the discharge capacity is low and overvoltage increases, causing loss of energy density. Accordingly, to achieve optimal solubility, it is important to properly mix the solvent having high solubility for polysulfide with the solvent having low solubility for polysulfide.

Meanwhile, according to the present disclosure, the non-aqueous solvent does not include the cyclic ether-based solvent.

The cyclic ether-based solvent is not limited to a particular type, but may include, for example, 2-methylfuran, 1,3-dioxolane, 4,5-dimethyl-dioxolane, 4,5-diethyl-dioxolane, 4-methyl-1,3-dioxolane, 4-ethyl-1,3-dioxolane, tetrahydrofuran, 2-methyltetrahydrofuran, 2,5-dimethyltetrahydrofuran, 2,5-dimethoxytetrahydrofuran, 2-ethoxytetrahydrofuran, 2-methyl-1,3-dioxolane, 2-vinyl-1,3-dioxolane, 2,2-dimethyl-1,3-dioxolane, 2-methoxy-1,3-dioxolane, 2-ethyl-2-methyl-1,3-dioxolane, tetrahydropyran, 1,4-dioxane or isosorbide dimethyl ether.

As described above, the use of the composition of the electrolyte for the lithium-sulfur battery according to an aspect of the present disclosure may suppress the elution of lithium polysulfide and prevent the passivation caused by the accumulation of lithium sulfide on the negative electrode, thereby enhancing stability of the lithium-sulfur battery during operation and improving capacity retention.

### Additive

In an embodiment of the present disclosure, the electrolyte for the lithium-sulfur battery may further include the additive.

The additive is not limited to a particular type and may include any type of additive that does not participate in the electrochemical reaction of the battery and plays a role in improving the efficiency of the negative electrode and the performance of the battery.

The additive may include a nitric acid-based compound. In addition to the lithium salt, the nitric acid-based compound may not only be dissolved in the electrolyte of the lithium secondary battery to provide ions, thereby improving the electrical conductivity of the lithium-sulfur battery, but also suppress the reduction reaction of polysulfide during charging/discharging of the lithium-sulfur battery, thereby preventing irreversible consumption of polysulfide, and improving the performance of the lithium-sulfur battery.

The nitric acid-based compound is not limited to a particular one and may include those having effects of forming a stable film on the negative electrode of the lithium-sulfur battery and improving charge/discharge efficiency.

For example, the nitric acid-based compound may be selected from the group consisting of an inorganic nitric acid-based or nitrous acid-based compound such as lithium nitrate (LiNO₃), potassium nitrate (KNO₃), cesium nitrate (CsNO₃), barium nitrate (Ba(NO₃)₂), ammonium nitrate (NH₄NO₃), lithium nitrite (LiNO₂), potassium nitrite (KNO₂), cesium nitrite (CsNO₂) or ammonium nitrite (NH₄NO₂); an organic nitric acid-based or nitrous acid-based compound such as methyl nitrate, dialkyl imidazolium nitrate, guanidine nitrate, imidazolium nitrate, pyridinium nitrate, ethyl nitrite, propyl nitrite, butyl nitrite, pentyl nitrite or octyl nitrite; and an organic nitro compound such as nitromethane, nitropropane, nitrobutane, nitrobenzene, dinitrobenzene, nitropyridine, dinitropyridine, nitrotoluene or dinitrotoluene, and a combination thereof, and preferably, may include lithium nitrate.

In an embodiment of the present disclosure, the additive may be included in an amount of from 1 wt% to 10 wt%, from 2 wt% to 9 wt%, from 3 wt% to 8 wt%, or from 3 wt % to 5 wt% based on the total 100 wt% of the electrolyte for the lithium-sulfur battery, but is not limited thereto. When the additive is included in the aforementioned amount, this has a beneficial effect on improving the electrical conductivity of the electrolyte and suppressing the reduction of polysulfide when used in the lithium-sulfur battery.

### Lithium-sulfur battery

In addition, according to another aspect of the present disclosure, there is provided a lithium-sulfur battery including the above-described electrolyte for the lithium-sulfur battery.

The lithium-sulfur battery relates to a lithium secondary battery including a positive electrode; a negative electrode; a separator interposed between the positive electrode and the negative electrode; and an electrolyte, wherein the electrolyte is the same as the above-described electrolyte for the lithium-sulfur battery of the present disclosure.

### Positive electrode

The positive electrode may include a positive electrode current collector and a positive electrode active material layer on one or two surfaces of the positive electrode current collector.

The positive electrode current collector supports a positive electrode active material and is not limited to a particular one and may include those having high conductivity without causing any chemical change in the corresponding battery. For example, the positive electrode active material layer includes the positive electrode active material, and may further include a conductive material, a binder and an additive.

The positive electrode active material includes a sulfur-carbon composite. The sulfur-carbon composite may include a porous carbon material and sulfur in at least part of the inside or the outer surface of the porous carbon material. Because the sulfur included in the positive electrode active material does not have electrical conductivity, it is used in combination with a conductive material such as the carbon material. The sulfur may include at least one selected from the group consisting of elemental sulfur (S₈) and a sulfur compound.

The sulfur-carbon composite includes the porous carbon material to provide the framework for holding the sulfur uniformly and stably, and make up for low electrical conductivity of the sulfur to enhance electrochemical reaction.

The porous carbon material may be generally manufactured by carbonization of various carbon precursors. The porous carbon material may include irregular pores therein, and have an average pore diameter ranging from 1 nm to 200 nm and a porosity ranging from 10% to 90% of the total volume of the porous carbon material. When the average pore diameter is below the aforementioned range, the pore size is only at the molecular level, making it impossible to load the sulfur, and on the contrary, when the average pore diameter is above the aforementioned range, it is not desirable for application to the electrode manufacturing process due to low mechanical strength of the porous carbon material.

In an embodiment of the present disclosure, the 'average pore diameter' may be measured by a known method for measuring the pore diameter of a porous material, and the measurement method is not limited to a particular one. For example, the pore diameter may be measured by scanning electron microscopy (SEM), field emission microscopy or laser diffraction. The measurement using laser diffraction may be done, for example, using a commercially available laser diffraction particle size measurement device (for example, Microtrac MT 3000).

In an embodiment of the present disclosure, the 'porosity' refers to the ratio of pore volume in a structure to its total volume and is indicated in %, and may be used interchangeably with void fraction, degree of porosity or the like. In the present disclosure, the measurement of the porosity is not limited to a particular method, and according to an embodiment of the present disclosure, for example, the porosity may be measured by the Brunauer-Emmett-Teller (BET) method using nitrogen gas, Hg porosimeter or ASTM D2873.

The porous carbon material may be spherical, rod-like, needle-like, platy, tubular or bulky in shape, and is not limited to a particular shape and may have any shape commonly used in the lithium-sulfur battery.

The porous carbon material may include any commonly used type of material having a porous structure or high specific surface area. For example, the porous carbon material may include at least one selected from the group consisting of graphite; graphene; carbon black such as Denka black, acetylene black, Ketjen black, channel black, furnace black, lamp black or thermal black; carbon nanotubes (CNT) such as single-walled carbon nanotubes (SWCNT) or multi-walled carbon nanotubes (MWCNT); carbon fibers such as graphite nanofibers (GNF), carbon nanofibers (CNF) or activated carbon fibers (ACF); graphite such as natural graphite, artificial graphite or expandable graphite and activated carbon, but is not limited thereto. Preferably, the porous carbon material may include carbon nanotubes.

In the sulfur-carbon composite according to the present disclosure, the sulfur may be located in at least one of the inside or the outer surface of the porous carbon material, and for example, may be present in an area of less than 100%, preferably 1% to 95%, and more preferably 40% to 96% of the inside and the outer surface of the porous carbon material. When the sulfur is present in the inside and the outer surface of the porous carbon material within the aforementioned range, the maximum effect may be provided in terms of electron transport area and electrolyte wettability. Specifically, within the aforementioned range, the sulfur may be loaded into the inside and the outer surface of the porous carbon material in a thin and even manner, thereby increasing the electron transport contact area during charging and discharging. When the sulfur is located in an area of 100% of the inside and the outer surface of the porous carbon material, the porous carbon material may be completely covered with the sulfur, and have poor wetting and contact with the electrolyte, thereby failing to gain electrons and participate in the electrochemical reaction.

The sulfur-carbon composite may, for example, include the sulfur in an amount of 65 wt% or more, specifically from 65 wt% to 90 wt%, from 70 wt% to 85 wt%, or from 72 wt% to 80 wt%, based on 100 wt% of the sulfur-carbon composite. When the amount of the sulfur falls within the aforementioned range, this may have a beneficial effect on improving the performance of the battery and increasing the capacity of the battery, but the present disclosure is not limited thereto.

The method for producing the sulfur-carbon composite of the present disclosure is not limited to a particular one in the present disclosure, and may include any method commonly used in the art. For example, one of the methods may include simply mixing the sulfur with the porous carbon material and performing thermal treatment to form a composite.

In addition to the above-described composition, the positive electrode active material may further include at least one selected from transition metal elements, Group IIIA elements, Group IVA elements, sulfur compounds of these elements, and alloys of these elements and sulfur.

The transition metal elements may include Sc, Ti, V, Cr, Mn, Fe, Co, Ni, Cu, Zn, Y, Zr, Nb, Mo, Tc, Ru, Rh, Pd, Os, Ir, Pt, Au or Hg, the Group IIIA elements may include Al, Ga, In or Ti, and the Group IVA elements may include Ge, Sn or Pb.

In the positive electrode of the lithium-sulfur battery of the present disclosure, the positive electrode active material may be, for example, included in an amount of 80 wt% or more, specifically from 80 wt% to 100 wt%, and more specifically from 85 wt% to 98 wt%, or from 80 wt% to 95 wt%, based on the total weight of the positive electrode active material layer. The lower limit of the amount of the positive electrode active material may be 70 wt% or more or 85 wt% or more, and the upper limit may be 99 wt% or less, or 90 wt% or less, based on the total 100 wt% of the positive electrode active material layer. The amount of the positive electrode active material may be set as a combination of the lower limit and the upper limit. When the amount of the positive electrode active material is below the aforementioned range, it may be difficult to achieve high capacity and high energy density in the battery due to the larger amount of the auxiliary material such as the conductive material and the binder and the smaller amount of the positive electrode active material, and on the contrary, when the amount of the positive electrode active material is above the aforementioned range, the physical properties of the electrode may become poor due to the relatively insufficient amount of the conductive material or the binder described below.

The conductive material is a material that electrically connects the electrolyte to the positive electrode active material and acts as a movement path of electrons from the current collector to the positive electrode active material, and may include, without limitation, any material having conductivity as the component of the electrode that is physically different from the carbon contained in the sulfur-carbon composite.

The conductive material may include, for example, carbon black such as Super-P, Denka black, acetylene black, Ketjen black, channel black, furnace black, lamp black, thermal black or carbon black; carbon derivatives such as carbon nanotubes or fullerene; conductive fibers such as carbon fibers or metal fibers; fluorocarbon; metal powder such as aluminum powder or nickel powder; or conductive polymer such as polyaniline, polythiophene, polyacetylene or polypyrrole, used singly or in combination.

The conductive material may be included in an amount of from 1 wt% to 10 wt% based on the total weight of the positive electrode active material. When the amount of the conductive material is below the aforementioned range, voltage and capacity may decrease due to poor electron transport between the positive electrode active material and the current collector. On the contrary, when the amount of the conductive material is above the aforementioned range, the total energy (amount of electric charge) of the battery may decrease due to the smaller ratio of the positive electrode active material, and accordingly it is preferable to determine the optimal amount within the aforementioned range.

The binder may hold the positive electrode active material onto the positive electrode current collector and bind the positive electrode active material to increase the bond strength, and may include any binder well-known in the art.

For example, the binder may include any one selected from the group consisting of a fluororesin-based binder including polyvinylidene fluoride (PVdF), polyvinylidene fluoride-based polymer including at least one vinylidene fluoride as a repeating unit, polytetrafluoroethylene (PTFE) or a mixture thereof; a rubber-based binder including styrene butadiene rubber (SBR), acrylonitrile-butadiene rubber or styrene-isoprene rubber; an acrylic binder; a cellulose-based binder including carboxyl methyl cellulose (CMC), starch, hydroxy propyl cellulose or regenerated cellulose; a polyalcohol-based binder; a polyolefin-based binder including polyethylene or polypropylene; a polyimide-based binder; a polyester-based binder; and a silane-based binder; or a mixture or copolymer thereof.

The binder may be included in an amount of from 1 wt% to 10 wt% based on the total weight of the positive electrode active material layer. When the amount of the binder is below the aforementioned range, the positive electrode active material and the conductive material may be separated due to the poor physical properties of the positive electrode, and when the amount of the binder is above the aforementioned range, the battery capacity may decrease due to the smaller ratio of the positive electrode active material and the conductive material in the positive electrode, and accordingly, it is preferable to determine the optimal amount within the aforementioned range.

In the present disclosure, the method for manufacturing the positive electrode of the lithium-sulfur battery is not limited to a particular one, and may include any method known to those skilled in the art or variations thereof.

For example, the positive electrode of the lithium-sulfur battery may be manufactured by preparing a positive electrode slurry composition including the above-described components and coating the positive electrode slurry composition on at least one surface of the positive electrode current collector to form the positive electrode active material layer.

The positive electrode slurry composition includes the above-described positive electrode active material, and may further include the binder, the conductive material and a solvent.

The solvent may include any solvent that evenly disperses the positive electrode active material. The solvent may include an aqueous solvent, and most preferably water, and in this instance, water may include distilled water or deionized water. However, the solvent is not limited thereto, and if necessary, may include lower alcohol that easily mixes with water. The lower alcohol may include methanol, ethanol, propanol, isopropanol and butanol, and preferably, these lower alcohols may be mixed with water.

The amount of the solvent may be at such a level of concentration at which the coating is made easy, and the specific amount may change depending on the coating method and device.

The positive electrode slurry composition may further include, if necessary, any material commonly used in the corresponding technical field for the purpose of improving the function, for example, a viscosity modifier, a fluidizing agent or fillers.

The coating method of the positive electrode slurry composition is not limited to a particular one in the present disclosure, and may include, for example, doctor blading, die casting, comma coating or screen printing. In addition, the positive electrode slurry may be coated on the positive electrode current collector by forming on a substrate and then pressing or lamination.

After the coating, a drying process may be performed to remove the solvent. The drying process may be performed at a sufficient level of temperature and time for removing the solvent, and the conditions may change depending on the type of solvent and are not particularly limited to the present disclosure. For example, the drying method may include drying by warm air, hot air or low-humidity air, vacuum drying, or drying by (far)infrared radiation and electron beam radiation. The drying speed is usually adjusted so as to remove the solvent as quickly as possible within a speed range for preventing cracks in the positive electrode active material layer due to stress concentration or the positive electrode active material layer from peeling off of the positive electrode current collector.

Additionally, after the drying, the current collector may be pressed to increase the density of the positive electrode active material in the positive electrode. The pressing method may include mold pressing and roll pressing.

The positive electrode manufactured by the above-described composition and manufacturing method, specifically the electrode active material layer may have a porosity of from 50% to 80%, and specifically from 60% to 75%. When the porosity of the positive electrode is less than 50%, it fails to maintain a sufficient amount of electrolyte for ensuring ionic and/or electrical conductivity in the positive electrode active material due to the very high level of filling of the positive electrode slurry composition including the positive electrode active material, the conductive material and the binder, resulting in poor output characteristics or cycling characteristics of the battery, which may aggravate overvoltage and a reduction in discharge capacity of the battery. On the contrary, when the positive electrode has very high porosity that is over 80%, physical and electrical connection with the current collector may be inadequate and adhesion strength may be low, leading to poor reaction, and higher porosity may increase the electrolyte filling and decrease the energy density of the battery, and accordingly the porosity is properly adjusted within the aforementioned range.

### Negative electrode

The negative electrode may include a negative electrode current collector and a negative electrode active material layer on one or two surfaces of the negative electrode current collector. Alternatively, the negative electrode may be a lithium metal plate.

The negative electrode current collector is used to support the negative electrode active material layer as described in the positive electrode current collector.

The negative electrode active material layer may include a negative electrode active material as well as a conductive material and a binder. In this instance, the conductive material and the binder follow the foregoing description.

The negative electrode active material may include a material that reversibly intercalates or deintercalates lithium ions (Li⁺), a material that reversibly forms a lithium-containing compound by reaction with lithium ions, a lithium metal, a lithium alloy, or a mixture thereof.

The material that reversibly intercalates or deintercalates lithium ions (Li⁺) may include, for example, a crystalline carbon, an amorphous carbon or a mixture thereof. The material that reversibly forms a lithium-containing compound by reaction with lithium ions (Li⁺) may include, for example, tin oxide, titanium nitrate or silicon. The lithium alloy may include, for example, an alloy of lithium (Li) and a metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative electrode active material may include a lithium metal, a lithium alloy or a mixture thereof, and specifically, the lithium metal may be in the form of a lithium metal thin film or a lithium metal powder.

### Separator

The separator separates or insulates the positive electrode from the negative electrode and allows lithium ion transport between the positive electrode and the negative electrode, and may include a porous non-conductive or insulating material, and is not limited to a particular type and may include any separator commonly used in the lithium secondary battery. The separator may include a free-standing film or a coating layer added to the positive electrode and/or the negative electrode.

The separator may preferably have low resistance to ion movement through the electrolyte and high electrolyte wetting capacity.

The separator may include a porous substrate, and the porous substrate may include any porous substrate commonly used in the secondary battery, and may include a porous polymer film used singly or in stack, for example, a nonwoven fabric made of high-melting-point glass fibers or polyethylene terephthalate fibers, or a polyolefin-based porous membrane, but is not limited thereto.

The porous substrate is not limited to a particular material in the present disclosure, and may include any porous substrate commonly used in the electrochemical device. For example, the porous substrate may include at least one material selected from the group consisting of polyolefin such as polyethylene or polypropylene, polyester such as polyethyleneterephthalate or polybutyleneterephthalate, polyamide, polyacetal, polycarbonate, polyimide, polyetheretherketone, polyethersulfone, polyphenyleneoxide, polyphenylenesulfide, polyethylenenaphthalate, polytetrafluoroethylene, polyvinylidene fluoride, polyvinyl chloride, polyacrylonitrile, cellulose, nylon, poly(p-phenylene)benzobisoxazole and polyarylate.

The thickness of the porous substrate is not limited to a particular range, but may range from 1 µm to 100 µm, and preferably from 5 µm to 50 µm. The thickness range of the porous substrate is not limited to the aforementioned range, but when the thickness is much smaller than the aforementioned lower limit, the separator may be easily damaged while the battery is in use due to poor mechanical properties.

The average pore diameter and porosity of the porous substrate are not limited to particular ranges but may range from 0.001 µm to 50 µm and from 10% to 95%, respectively.

The lithium-sulfur battery according to the present disclosure may be manufactured by a commonly used process, winding, as well as lamination (stacking) and folding of the separator and the electrode.

The lithium-sulfur battery is not limited to a particular shape, and may have various shapes such as a cylindrical type, stack type, a coin type or a pouch type.

Hereinafter, exemplary embodiments are presented to help the understanding of the present disclosure, but the following embodiments are provided to describe the present disclosure by way of example, and it is obvious to those skilled in the art that a variety of changes and modifications may be made thereto within the scope and technical aspects of the present disclosure, and it should be understood that such changes and modifications fall within the scope of the appended claims.

### <Preparation of electrolyte for lithium-sulfur battery>

### Examples 1 to 4 and Comparative Examples 1 to 10

An electrolyte for a lithium-sulfur battery was prepared with the composition shown in TABLE 1 below.

**[TABLE 1]**

| | Lithium salt | | Solvent 1 | | Solvent 2 | | Additive | |
|---|---|---|---|---|---|---|---|---|
| | Type | Concentr ation | Type | Volume ratio (vol%) | Type | Volume ratio (vol%) | Type | Concentration (wt%) |
| Example 1 | LiFSI | 0.5M | DME | 60 | EGDEE | 40 | LiNO₃ | 5 |
| Example 2 | LiFSI | 0.33M | DME | 60 | EGDEE | 40 | LiNO₃ | 5 |
| | LiBETI | 0.17M | | | | | | |
| Example 3 | LiFSI | 0.5M | DGDME | 60 | EGDEE | 40 | LiNO₃ | 5 |
| Example 4 | LiFSI | 0.5M | DME | 40 | EGDEE | 60 | LiNO₃ | 5 |
| Comparative Example 1 | LiFSI | 0.5M | DME | 80 | 2-MeF | 20 | LiNO₃ | 5 |
| Comparative Example 2 | LiFSI | 0.5M | DME | 80 | EGDEE | 20 | LiNO₃ | 5 |
| Comparative Example 3 | LiFSI | 0.5M | DME | 70 | EGDEE | 30 | LiNO₃ | 5 |
| Comparative Example 4 | LiFSI | 0.33M | DME | 80 | 2-MeF | 20 | LiNO₃ | 5 |
| | LiBETI | 0.17M | | | | | | |
| Comparative Example 5 | LiFSI | 0.5M | THF | 60 | EGDEE | 40 | LiNO₃ | 5 |
| Comparative Example 6 | LiFSI | 0.5M | THP | 60 | EGDEE | 40 | LiNO₃ | 5 |
| Comparative Example 7 | LiFSI | 0.5M | DGDME | 60 | 2-MeF | 40 | LiNO₃ | 5 |
| Comparative Example 8 | LiFSI | 0.5M | DGDME | 70 | EGDEE | 30 | LiNO₃ | 5 |
| Comparative Example 9 | LiFSI | 0.5M | DME | 20 | EGDEE | 80 | LiNO₃ | 5 |
| Comparative Example 10 | LiFSI | 0.5M | DME | 60 | DGDEE | 40 | LiNO₃ | 5 |

In the above TABLE 1,
LiFSI is lithium bis(fluorosulfonyl)imide, LiN(SO₂F)₂
LiBETI is lithium bisperfluoroethanesulfonimide, LiN(SO₂CF₂CF₃)₂
DME is dimethoxyethane,
DGDME is diethylene glycol dimethyl ether,
THF is tetrahydrofuran,
THP is tetrahydropyran,
EGDEE is ethylene glycol diethyl ether,
DGDEE is diethylene glycol diethyl ether, and

### 2-MeF is 2-methylfuran.

### Performance evaluation of lithium-sulfur battery

96 wt% of a sulfur-carbon composite (S:C = 75:25 (weight ratio)) as a positive electrode active material and 4 wt% of a binder were mixed to prepare a positive electrode slurry composition. The positive electrode slurry composition was coated on an aluminum current collector and dried to manufacture a positive electrode. The porosity of the manufactured positive electrode was about 75% and the loading amount was about 3.0 mAh/cm².

A 35 µm-thick lithium metal was used as a negative electrode.

The positive electrode and the negative electrode were placed to face each other with a polyethylene separator having a thickness of 12 µm and a porosity of about 40% interposed between and stacked to assemble a pouch cell, followed by electrolyte injection and sealing to manufacture a lithium-sulfur pouch cell.

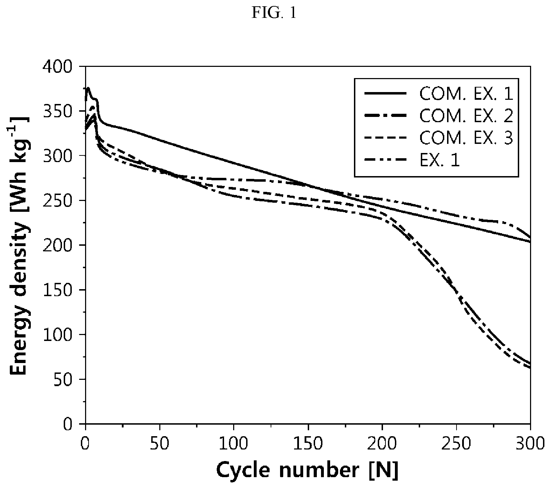

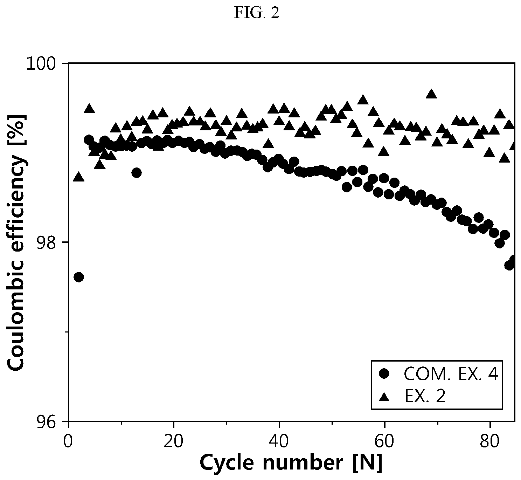

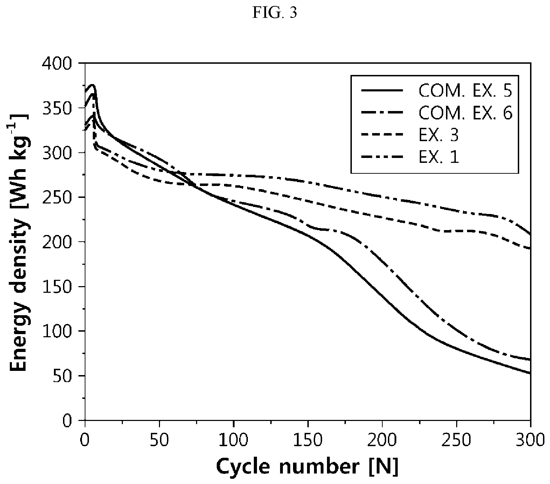

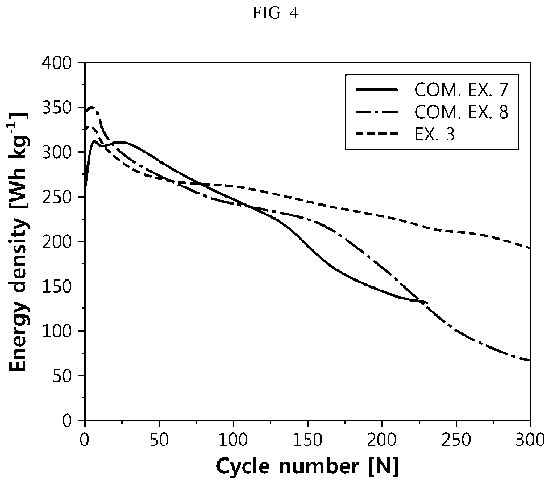

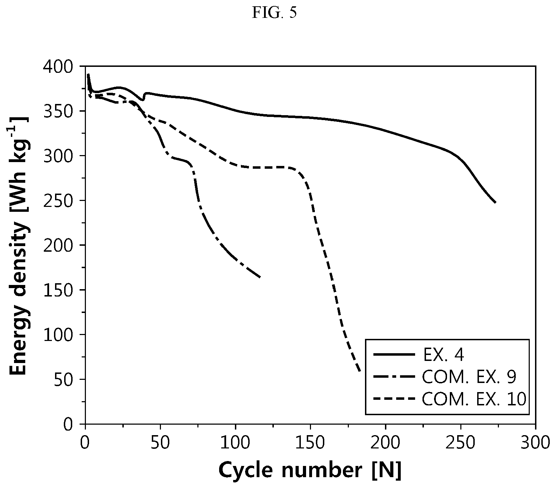

The as-prepared lithium-sulfur pouch cell undergone 0.1C initial discharge at 25°C in 1.8V-2.5V cut-off condition, then 0.1C/0.1C charge/discharge 2 cycles and 0.2C/0.5C charge/discharge, and energy density and/or Coulombic efficiency vs cycle number was evaluated. FIGS 1 to 5 shows the results.

In this instance, Coulombic efficiency (%) was calculated by dividing the discharge capacity of the pouch cell by charge capacity, and energy density (Wh/kg) was calculated by dividing the pouch cell capacity (Wh) by the pouch cell weight (kg).

Referring to FIGS. 1 to 5,
it was confirmed that Comparative Example 1, Comparative Example 4 and Comparative Example 7 had low energy density and Coulombic efficiency by use of cyclic ether.
it was confirmed that Comparative Example 2, Comparative Example 3 and Comparative Example 8 had low energy density due to the small amount of the compound having the structure of Chemical Formula 1.

It was confirmed that Comparative Example 5 and Comparative Example 6 included the compound having the structure of Chemical Formula 1 in the optimal amount, but had very low energy density because of including cyclic ether.

It was confirmed that Comparative Example 9 showed a rapid decline of energy density in a small number of cycles due to the large amount of the compound having the structure of Chemical Formula 1.

It was confirmed that Comparative Example 10 did not use the cyclic ether as the non-aqueous solvent, and only used the linear ether, but showed a rapid decline of energy density in a small number of cycles because it did not include the compound having the structure of Chemical Formula 1.

## Claims

1. An electrolyte for a lithium-sulfur battery, comprising:
a lithium salt and a non-aqueous solvent,
wherein the non-aqueous solvent includes a linear ether-based solvent, but does not include a cyclic ether-based solvent,
wherein the linear ether-based solvent includes a compound having a structure of the following Chemical Formula 1, and
wherein the compound having the structure of the following Chemical Formula 1 is included in an amount of from 35 vol% to 70 vol% based on a total 100 vol% of the non-aqueous solvent: 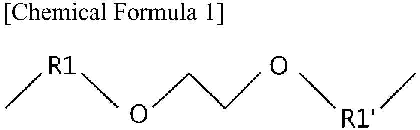
wherein R1 and R1' are each independently a straight-chain or branched alkylene group with 1 to 10 carbon atoms, a straight-chain or branched alkenylene group with 1 to 10 carbon atoms, a cycloalkylene group with 3 to 10 carbon atoms, or an arylene group with 6 to 10 carbon atoms.

2. The electrolyte for the lithium-sulfur battery according to claim 1,
wherein R1 and R1' in the compound having the structure of the Chemical Formula 1 are each independently a straight-chain alkylene group with 1 to 10 carbon atoms.

3. The electrolyte for the lithium-sulfur battery according to claim 1,
wherein the compound having the structure of the Chemical Formula 1 is included in an amount of from 40 vol% to 60 vol% based on the total 100 vol% of the non-aqueous solvent.

4. The electrolyte for the lithium-sulfur battery according to claim 1,
wherein the non-aqueous solvent further includes dimethoxymethane, dimethoxyethane(DME), dimethoxypropane, ethylene glycol ethylmethylether, or a mixture thereof as the linear ether-based solvent.

5. The electrolyte for the lithium-sulfur battery according to claim 1,
wherein the non-aqueous solvent further includes dimethoxy ethane (DME) as the linear ether-based solvent.

6. The electrolyte for the lithium-sulfur battery according to claim 1,
wherein the non-aqueous solvent is composed of the linear ether-based solvent.

7. The electrolyte for the lithium-sulfur battery according to claim 1, further comprising:
an additive_{.}

8. The electrolyte for the lithium-sulfur battery according to claim 7,
wherein the additive includes a nitric acid-based compound.

9. The electrolyte for the lithium-sulfur battery according to claim 8,
wherein the nitric acid-based compound includes lithium nitrate (LiNO₃).

10. A lithium-sulfur battery comprising:
a positive electrode; a negative electrode; a separator between the positive electrode and the negative electrode; and an electrolyte,
wherein the electrolyte is defined in any one of claims 1 to 9.

11. The lithium-sulfur battery according to claim 10,
wherein the positive electrode includes a sulfur-containing compound as a positive electrode active material.

12. The lithium-sulfur battery according to claim 10,
wherein the negative electrode includes a lithium metal, a lithium alloy or a mixture thereof as a negative electrode active material.
